# EUROPEAN PATENT APPLICATION

(11) **EP 4 790 380 A1**
(43) Date of publication of application: **12.08.2026**
(21) Application number: 25222945.5
(22) Date of filing: 12.12.2025
(51) Int. Cl.: G01M 11/06

(54) **INSPECTION SYSTEM AND INSPECTION METHOD**

(30) Priority: 05.02.2025 JP 2025017520
(71) Applicant: Toyota Jidosha Kabushiki Kaisha, Toyota-shi, Aichi-ken 471-8571 (JP)
(72) Inventor: HATANO, Yasuyoshi, Toyota-shi, Aichi-ken, 471-8571 (JP); SAWANO, Takuro, Toyota-shi, Aichi-ken, 471-8571 (JP)
(74) Representative: TBK

(57) **Abstract**

An inspection system includes an image acquisition unit and an inspection unit. The image acquisition unit acquires an image captured by an imaging device, the image including projected light projected on a projection target from a front lamp provided to a moving object. The inspection unit uses the acquired image to inspect light distribution characteristics of the front lamp.

## Description

### BACKGROUND

### FIELD

The present disclosure relates to an inspection system and an inspection method.

### RELATED ART

Japanese Translation of PCT International Application Publication No. JP-T-2017-538619 discloses a technology of causing a vehicle to run by unmanned driving in a production step of the vehicle.

A new inspection technique to inspect light distribution characteristics of a front lamp provided to a moving object such as a vehicle has been desired. Such an object is commonly applicable to any moving objects with a front lamp regardless of a type of moving object or whether the moving object is movable by unmanned driving.

### SUMMARY

The present disclosure is achievable as the following aspects.
(1) According to one aspect of the present disclosure, an inspection system is provided. The inspection system includes an image acquisition unit and an inspection unit. The image acquisition unit acquires an image captured by an imaging device, the image including projected light projected on a projection target from a front lamp provided to a moving object. The inspection unit uses the acquired image to inspect light distribution characteristics of the front lamp.
   According to this aspect, the light distribution characteristics of the front lamp can be inspected by the new method using the captured image including the projected light from the front lamp.
(2) The above-described aspect may further include an adjustment unit that adjusts an optical system of the front lamp. The adjustment unit may adjust the optical system in accordance with an inspection result of the light distribution characteristics by the inspection unit. According to this aspect, it is possible not only to inspect the light distribution characteristics, but also to effectively improve the light distribution characteristics in accordance with the inspection result.
(3) In the above-described aspect, the inspection unit may compare a light distribution pattern of the projected light in the image and a reference light distribution pattern corresponding to a type of the moving object to inspect the light distribution characteristics. According to this aspect, the light distribution characteristics of various types of moving objects can be inspected by the simpler method.
(4) The above-described aspect may further include a control unit that causes the moving object to move by unmanned driving. The control unit may execute: entry processing of causing the moving object to move to a reference position determined in advance; standby processing of causing the moving object to stay at the reference position after the entry processing; and withdrawal processing of causing the moving object to move from the reference position after the standby processing. The image acquisition unit may acquire the image captured during execution of the standby processing, while the standby processing is executed. The inspection unit may inspect the light distribution characteristics while the standby processing is executed. According to this aspect, it is possible to utilize the unmanned driving to move the moving object to the reference position, inspect the light distribution characteristics while the moving object stays at the reference position, and make the reference position vacant after completion of the inspection. As a result, the unmanned driving can be utilized to more smoothly inspect the light distribution characteristics.
(5) The above-described aspect may further include an adjustment unit that adjusts an optical system of the front lamp. The light distribution characteristics may include optical axis characteristics related to an optical axis of the front lamp. After the optical axis characteristics are inspected, when an inspection result of the optical axis characteristics by the inspection unit does not satisfy an optical axis condition determined in advance, the adjustment unit may execute adjustment processing of adjusting the optical system in accordance with the inspection result while the standby processing is executed. After the adjustment processing is executed, the inspection unit may re-inspect the optical axis characteristics while the standby processing is executed. According to this aspect, when the inspection result of the optical axis characteristics does not satisfy the optical axis condition, adjustment of the optical system and re-inspection of the optical axis characteristics can efficiently be executed while the moving object stays at the reference position.
(6) In the above-described aspect, the control unit may not execute the withdrawal processing until the inspection result satisfies the optical axis condition. According to this aspect, the steps from the inspection of the optical axis characteristics to the adjustment of the optical system can be executed in a batch while the moving object stays at the reference position.
(7) In the above-described aspect, the control unit may be capable of controlling the front lamp and switch the front lamp from OFF to ON after the entry processing is started and before the image is captured. According to this aspect, while energy consumption by the front lamp is suppressed, the light distribution characteristics can be inspected more smoothly.
(8) In the above-described aspect, the control unit may be capable of controlling the front lamp and switch the front lamp from ON to OFF after the image is captured and before the withdrawal processing is started. According to this aspect, energy consumption by the front lamp can be further suppressed.
(9) In the above-described aspect, the projection target may be a wall surface of a wall installed outside of the moving object. According to this aspect, the wall can be utilized to inspect the light distribution characteristics.
(10) In the above-described aspect, the projection target may be a road surface of a track on which a vehicle as the moving object is capable of running. According to this aspect, the track can be utilized to inspect the light distribution characteristics.
(11) In the above-described aspect, the front lamp may include a first front lamp and a second front lamp. The projected light may include first light projected by the first front lamp and second light projected by the second front lamp. The inspection unit may use the acquired image to inspect light distribution characteristics of the first front lamp and light distribution characteristics of the second front lamp. According to this aspect, the inspection image containing the projected light can be used to inspect the light distribution characteristics of the first front lamp and the light distribution characteristics of the second front lamp in a batch.
(12) In the above-described aspect, the imaging device may be installed outside of the moving object and used to acquire positional information of the moving object for unmanned driving of the moving object. According to this aspect, the imaging device utilized for the unmanned driving can be utilized to inspect the light distribution characteristics.

The present disclosure can be implemented in aspects other than the aspect as the inspection system described above. For example, the present disclosure can be implemented in aspects, such as a control device, an inspection method, a program to implement an inspection method, a non-transitory recording medium recording a program, and a program product. Note that the program product may be provided as, for example, a recording medium recording a program, or a program product distributable over a network.

### BRIEF DESCRIPTION OF THE DRAWINGS

Fig. 1 is a conceptual diagram illustrating a configuration of an inspection system according to a first embodiment;
Fig. 2 is a block diagram illustrating a configuration of the inspection system according to the first embodiment;
Fig. 3 is a first diagram for explaining front lamp inspection according to the first embodiment;
Fig. 4 is a second diagram for explaining the front lamp inspection according to the first embodiment;
Fig. 5 is a flowchart illustrating a procedure of running control of a vehicle according to the first embodiment;
Fig. 6 is a flowchart illustrating a procedure of inspection processing according to the first embodiment;
Fig. 7 is a diagram for explaining front lamp inspection according to a second embodiment;
Fig. 8 is an explanatory diagram illustrating a schematic configuration of an inspection system according to a third embodiment; and
Fig. 9 is a flowchart illustrating a procedure of running control of a vehicle according to the third embodiment.

### DETAILED DESCRIPTION

### A. First Embodiment

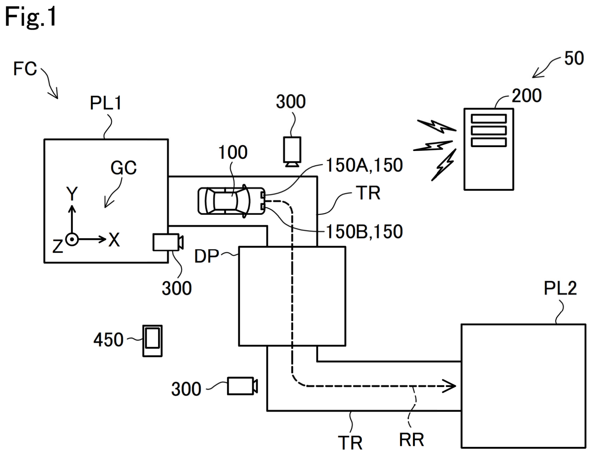

Fig. 1 is a conceptual diagram illustrating a configuration of an inspection system 50 according to a first embodiment. The inspection system 50 includes one or more vehicles 100, a server 200, one or more external sensors 300, and a terminal device 450.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The vehicle 100 is simply required to have a configuration to become movable by unmanned driving. The vehicle 100 may embodied as a platform having the following configuration, for example. The vehicle 100 is simply required to include at least a vehicle controller and an actuator group described below in order to fulfill three functions including "run," "turn," and "stop" by unmanned driving. In order for the vehicle 100 to acquire information from outside for unmanned driving, the vehicle 100 is simply required to include a communication device further. Specifically, the vehicle 100 to become movable by unmanned driving is not required to be equipped with at least some of interior components such as a driver' s seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

In the present embodiment, the inspection system 50 is used in a factory FC where the vehicle 100 is produced. A reference coordinate system in the factory FC is a global coordinate system GC, and any position in the factory FC can be represented by X, Y, and Z coordinates in the global coordinate system GC. The factory FC includes a first place PL1, a second place PL2, and an inspection site DP. A track TR on which the vehicle 100 is able to run connects the first place PL1 and the inspection site DP and connects the inspection site DP and the second place PL2. The vehicle 100 moves from the first place PL1 to the second place PL2 via the inspection site DP through the track TR by unmanned driving. At the first place PL1 and the second place PL2, production steps related to the vehicle 100, such as assembly and inspection of the vehicle 100, are performed. At the first place PL1, a first step related to the vehicle 100 is performed. At the second place PL2, a second step subsequent to the first step is performed.

Note that the "track" as used in the present disclosure is not limited to the track TR, but means a floor on which the vehicle 100 is able to run. In the present embodiment, the first place PL1, the second place PL2, and the inspection site DP include the track.

At the inspection site DP, front lamp inspection is performed. In the front lamp inspection, a front lamp 150 provided to the vehicle 100 is inspected. The front lamp 150 is provided to a moving object and used to illuminate ahead of the moving object. In the present embodiment, the vehicle 100 includes a first front lamp 150A and a second front lamp 150B as the front lamp 150. That is, the front lamp 150 includes the first front lamp 150A and the second front lamp 150B. In the present embodiment, the first front lamp 150A and the second front lamp 150B are a left-and-right pair of headlamps provided to the vehicle 100. The first front lamp 150A corresponds to a right headlamp and the second front lamp 150B corresponds to a left headlamp. In the present embodiment, the first front lamp 150A and the second front lamp 150B correspond to the front lamp as an inspection target of the front lamp inspection. Note that, in other embodiments, for example, the front lamp 150 which is one of the first front lamp 150A and the second front lamp 150B may be the inspection target. When the first front lamp 150A and the second front lamp 150B are not particularly distinguished from one another, they are also simply referred to as the front lamp 150.

In other embodiments, the vehicle 100 may include a foglamp as the front lamp 150. In this case, the front lamp as the inspection target may include at least either of one or more headlamps and one or more foglamps.

The external sensor 300 is a sensor located outside the vehicle 100. In the present embodiment, the external sensor 300 is configured by a camera. The camera as the external sensor 300 captures the vehicle 100 and outputs a captured image as a detection result. The external sensor 300 includes a communication device (not illustrated) and can communicate with another device, such as the server 200, by wired or wireless communication. In the factory FC, a plurality of external sensors 300 is disposed along the track TR. A position of each external sensor 300 in the factory FC is adjusted in advance. As will be described later, in the present embodiment, the external sensor 300 is used as an "imaging device" in the front lamp inspection.

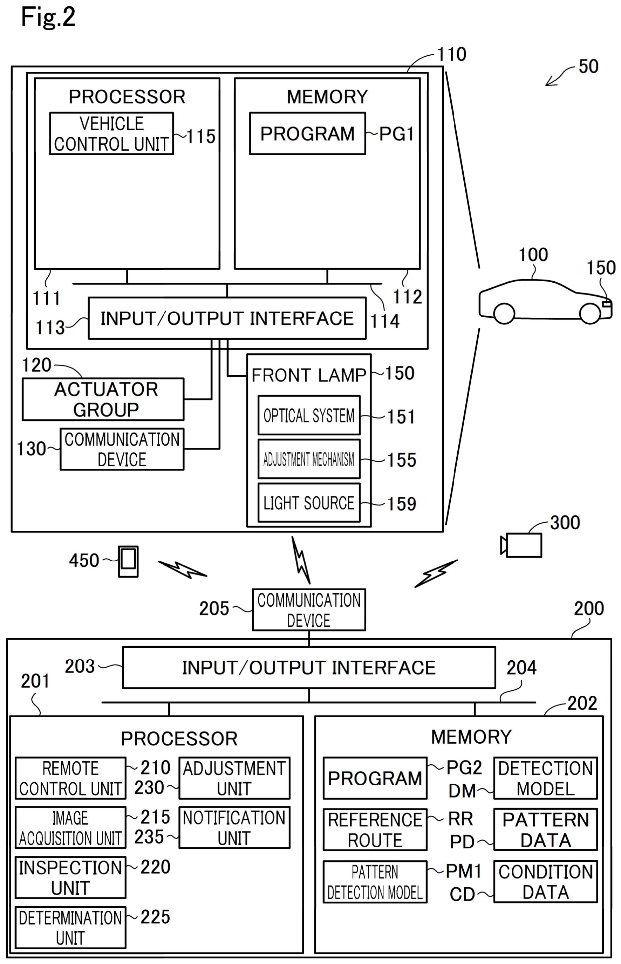

Fig. 2 is a block diagram illustrating a configuration of the inspection system 50. The vehicle 100 includes a vehicle control device 110 that controls each unit of the vehicle 100, an actuator group 120 including one or more actuators that perform driving under control of the vehicle control device 110, a communication device 130 to communicate with an external device such as the server 200 by wireless communication, and the front lamp 150. The actuator group 120 includes an actuator for a driving device to accelerate the vehicle 100, an actuator for a steering device to change a traveling direction of the vehicle 100, and an actuator for a braking device to decelerate the vehicle 100. In addition, the actuator group 120 includes a front lamp actuator to cause the front lamp 150 to operate. Examples of the front lamp actuator include an actuator to switch the front lamp 150 between ON and OFF, and an actuator to switch an operation mode of the front lamp 150 between a low-beam mode and a high-beam mode.

The front lamp 150 includes an optical system 151, an adjustment mechanism 155, and a light source 159. The optical system 151 concentrates light emitted from the light source 159 and emits the concentrated light to the outside of the front lamp 150. The optical system 151 includes a lens, a reflector, and a shade for concentrating and emitting light. Such an optical system 151 has a function of forming a cut-off line of the front lamp 150. Examples of the light source 159 include a halogen lamp, a LED lamp, and a HID lamp. The adjustment mechanism 155 is used for adjustment of the optical system 151. More specifically, in the present embodiment, the adjustment mechanism 155 adjusts positions and angles of the reflector and the lens included in the optical system 151 to adjust an optical axis of the front lamp 150. For example, the adjustment mechanism 155 is an electric adjustment mechanism and includes a motor that generates driving force to change the position and angle of the optical system 151 and a transmission mechanism to transmit the driving force of the motor to the optical system 151. As will be described later, in the present embodiment, the adjustment mechanism 155 is controllable by an adjustment unit 230 of the server 200.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120, the communication device 130, and the front lamp 150 are coupled to the input/output interface 113. The processor 111 executes a program PG1 stored in the memory 112, thus implementing various functions including a function as a vehicle control unit 115.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

In the present embodiment, the vehicle control unit 115 can use a control signal received from the server 200 to cause the front lamp actuator included in the actuator group 120 to operate, thereby causing the front lamp to operate.

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices located outside of the server 200 is coupled to the input/output interface 203. The communication device 205 can communicate with the vehicle 100 by wireless communication, and can communicate with each external sensor 300 by wired or wireless communication. The memory 202 stores various types of information including a program PG2, a detection model DM, a reference route RR, pattern data PD, a pattern detection model PM1, and condition data CD. The processor 201 executes the program PG2 stored in the memory 202, thus implementing various functions including functions as a remote control unit 210, an image acquisition unit 215, an inspection unit 220, a determination unit 225, and the adjustment unit 230. The remote control unit 210 of the first embodiment corresponds to a "control unit" of the present disclosure.

The remote control unit 210 acquires a detection result of a sensor and uses the detection result to generate the running control signal to control the actuator group 120 of the vehicle 100. The remote control unit 210 then transmits the running control signal to the vehicle 100 to cause the vehicle 100 to run by remote control. Further, in the present embodiment, the remote control unit 210 generates the control signal to cause the front lamp 150 to operate and transmits the generated control signal to the vehicle 100, and thereby can remotely control the front lamp.

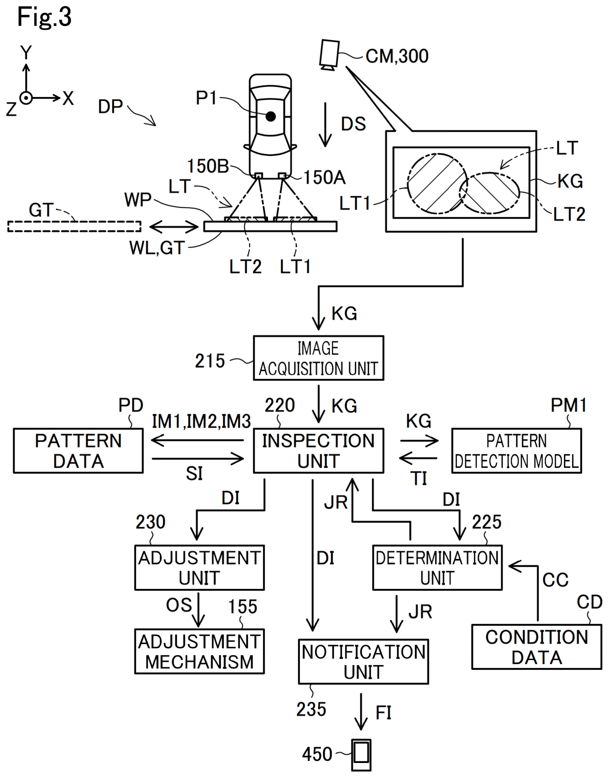

Fig. 3 is a first diagram for explaining the front lamp inspection according to the present embodiment. In the front lamp inspection, light distribution characteristics of the front lamp 150 are inspected. In the front lamp inspection, as the light distribution characteristics of the front lamp, at least one of optical axis characteristics, light quantity characteristics, and light color characteristics of the front lamp 150 is preferably inspected. That is, an inspection item of the front lamp inspection preferably includes at least one of the optical axis characteristics, the light quantity characteristics, and the light color characteristics. The optical axis characteristics are characteristics related to an optical axis of the front lamp 150. The light quantity characteristics are characteristics related to light quantity of the front lamp 150. The light color characteristics are characteristics related to light color of the front lamp 150. In the inspection of the optical axis characteristics, whether a position of the cut-off line of the front lamp 150 is appropriate is inspected. In the case as the present embodiment in which the front lamp 150 is the headlamp, "the position of the cut-off line is appropriate" includes "a position of an elbow point is appropriate". The elbow point means a point at which the cut-off line bends.

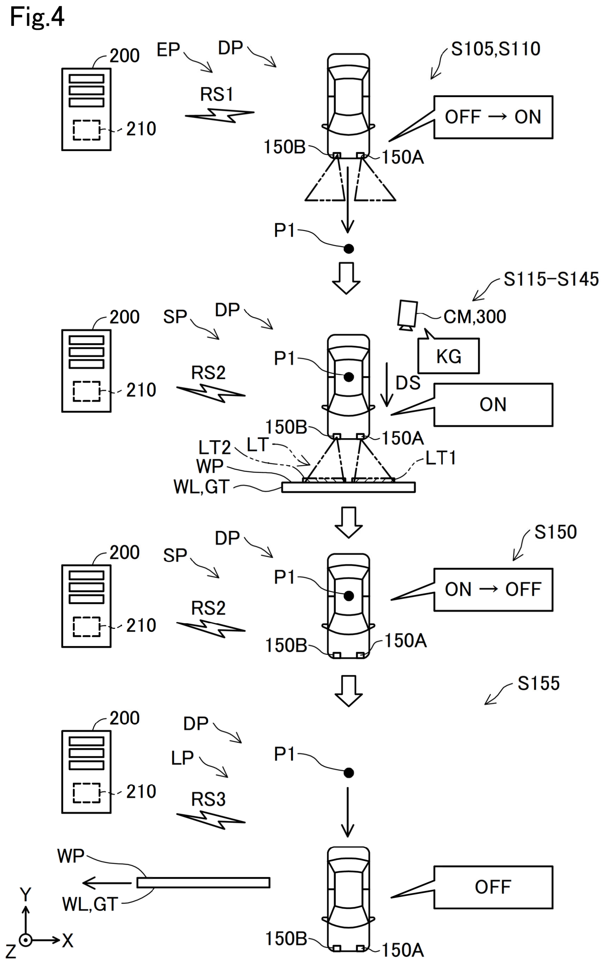

As illustrated in Fig. 3, the image acquisition unit 215 acquires an inspection image KG captured by the imaging device CM. The inspection image KG includes projected light LT. The projected light LT is light projected on a projection target from the front lamp 150. In the present embodiment, the projection target is a wall surface WP of a wall WL installed outside of the vehicle 100. The wall WL is installed at the inspection site DP. More specifically, in the present embodiment, the wall WL is formed by a gate GT provided to the factory FC. The gate GT is openable and closable. The wall WL is formed by closing the gate GT. The vehicle 100 runs through the opened gate GT and thus can pass through the gate GT. That is, the gate GT is switchable between a permitting state in which access of the vehicle 100 is permitted and a prohibiting state in which access of the vehicle 100 is prohibited. For example, the gate GT may be controllable by the control unit. Accordingly, the wall WL can appropriately be formed by the gate GT in accordance with progress of the front lamp inspection, and access of the vehicle 100 can appropriately be permitted. Alternatively, for example, the gate GT may be an automatic door that permits access of the vehicle 100 when the vehicle 100 is positioned ahead of a reference position P1 described later, and prohibits access of the vehicle 100 and forms the wall WL when the vehicle 100 is positioned at the reference position P1 or the vehicle 100 is positioned behind the reference position P1. Note that, in Fig 3 and Fig. 4 described later, the gate GT in the permitting state is indicated by a broken line.

The projected light LT in the present embodiment includes first light LT1 projected by the first front lamp 150A and second light LT2 projected by the second front lamp 150B. More specifically, the projected light LT in the present embodiment is formed by light emitted from the first front lamp 150A and light emitted from the second front lamp 150B being simultaneously projected on the projection target. In the inspection image KG including such projected light LT, the first light LT1 and the second light LT2 may be positioned apart from one another or positioned to partly or entirely overlap one another. In the present embodiment, the inspection unit 220 uses the inspection image KG including such projected light LT to inspect light distribution characteristics of the first front lamp 150A and light distribution characteristics of the second front lamp 150B in a batch.

More specifically, the imaging device CM captures the projection target on which the projected light LT is projected to obtain the inspection image KG. As will be described later, the inspection image KG is used for the front lamp inspection. Note that, in the front lamp inspection, for example, the inspection image KG to which various types of pre-steps are applied may be used. In the present embodiment, the imaging device CM is a camera as the external sensor 300. As a result, as will be described later, in the present embodiment, the imaging device CM is also used to acquire vehicle positional information for the unmanned driving.

The inspection unit 220 uses the inspection image KG acquired by the image acquisition unit 215 to inspect the light distribution characteristics of the front lamp 150. In the present embodiment, the inspection unit 220 executes comparison processing to inspect the light distribution characteristics. The comparison processing is processing of comparing a target pattern and a reference light distribution pattern. The target pattern indicates a light distribution pattern of the projected light LT in the inspection image KG. The reference light distribution pattern is a reference light distribution pattern corresponding to a type of the vehicle 100, that is, a vehicle type. The reference light distribution pattern may be a light distribution pattern corresponding to, in addition to the vehicle type, for example, specifications of the front lamp 150 or a delivery destination of the vehicle 100. Examples of the specifications of the front lamp 150 include a type of the light source 159. The "delivery destination" refers to a country or an area that is a delivery destination of the vehicle 100 as a product. The reference light distribution pattern corresponds to the light distribution pattern of the projected light projected on the projection target from the front lamp with ideal light distribution characteristics.

In the comparison processing, the inspection unit 220 first acquires target pattern information TI indicating the target pattern and reference pattern information SI indicating the reference light distribution pattern. In the present embodiment, the inspection unit 220 uses the pattern detection model PM1 to acquire the target pattern information TI. In the present embodiment, the pattern detection model PM1 is a machine learning model that has been trained to output, in response to input of an image, pattern information indicating the light distribution pattern in the input image. As the pattern detection model PM1, for example, a convolutional neural network (CNN) that has been trained through supervised learning can be used. Such supervised learning uses a learning dataset including the inspection image KG as an explanatory variable and pattern information as an objective variable, that is, a label. In the present embodiment, the pattern information includes, in accordance with the inspection item of the front lamp inspection, cut-off line information indicating the position of the cut-off line, light quantity information indicating the light quantity, and/or light color information indicating the light color. The cut-off line information may include elbow information indicating the position of the elbow point. For example, the cut-off line information is used for inspection of the optical axis characteristics. For example, the light quantity information is used for inspection of the light quantity characteristics. For example, the light color information is used for inspection of the light color characteristics. The inspection unit 220 inputs the inspection image KG into the pattern detection model PM1 to acquire the target pattern information TI including such a variety of information.

In the present embodiment, the inspection unit 220 acquires the reference pattern information SI that has been prepared in advance. For example, the reference pattern information SI is prepared in advance by inputting an image including the reference light distribution pattern into the pattern detection model PM1. Note that, in another embodiment, for example, the inspection unit 220 may acquire a reference image including the reference light distribution pattern and input the acquired reference image into the pattern detection model PM1 to acquire the reference pattern information SI in the comparison processing. In this case, for example, the inspection unit 220 acquires the reference image from the memory 202, the memory 112, an external computer, an external recording medium, or the like.

In the present embodiment, the reference pattern information SI is included in the pattern data PD stored in the memory 202 in advance. In the pattern data PD, the vehicle type and the reference pattern information SI corresponding to the vehicle type are associated with one another. As described above, in the case in which the reference light distribution pattern is the light distribution pattern corresponding to the specifications of the front lamp 150 or the delivery destination of the vehicle 100, in the pattern data PD, the reference pattern information SI is further associated with the specifications of the front lamp 150 or the delivery destination of the vehicle 100. The inspection unit 220 acquires type information IM1 indicating the vehicle type of the vehicle 100 and refers to the pattern data PD by using the acquired type information, and thereby can acquire the reference pattern information SI corresponding to the vehicle type. Moreover, for example, the inspection unit 220 may further refer to the pattern data PD by using specification information IM2 indicating the specifications of the front lamp 150, or delivery destination information IM3 indicating the delivery destination of the vehicle 100, and thereby acquire the reference pattern information SI corresponding to the specifications of the front lamp 150 or the delivery destination.

Note that, for example, the type information IM1, the specification information IM2, and the delivery destination information IM3 may be acquired by reading a two-dimensional code attached to the vehicle 100, may be input into the server 200 by a user through an input device, or may be acquired from a step management device (not illustrated) that manages production steps of the vehicle 100. Note that the user as used herein means a user of the factory FC or the inspection system 50, and is, for example, an administrator or a worker of the factory FC. As the input device, for example, the terminal device 450 held by the user may be used. Examples of the terminal device 450 include a tablet terminal and a smartphone.

In the comparison processing, the inspection unit 220 next compares the acquired target pattern information TI and the acquired reference pattern information SI to acquire light distribution characteristic information DI indicating the light distribution characteristics of the front lamp 150. Then, the inspection unit 220 outputs, as an inspection result related to each inspection item, the light distribution characteristic information DI for each front lamp 150 as the inspection target and for each inspection item. In the present embodiment, the light distribution characteristic information DI includes, in accordance with the inspection item of the front lamp inspection, optical axis characteristic information indicating the optical axis characteristics, light quantity characteristic information indicating the light quantity characteristics, and/or light color characteristic information indicating the light color characteristics. In the present embodiment, the light distribution characteristic information DI indicates a difference between the target pattern information TI and the reference pattern information SI. For example, the optical axis characteristic information includes information indicating a difference in positional coordinates of the cut-off lines, a distance between the cut-off lines, a difference in positional coordinates of the elbow points, and a distance between the elbow points when the target pattern information TI and the reference pattern information SI are compared. For example, the light quantity characteristic information includes information indicating a difference in light quantity when the target pattern information TI and the reference pattern information SI are compared. For example, the light color characteristic information includes a difference in light color when the target pattern information TI and the reference pattern information SI are compared.

The determination unit 225 determines whether the inspection result of the light distribution characteristics by the inspection unit 220 satisfies a characteristic condition CC determined in advance. In the present embodiment, the determination unit 225 determines whether the characteristic condition CC is satisfied with regard to the inspection result acquired for each front lamp 150 as the inspection target and for each inspection item. Then, the determination unit 225 outputs a determination result JR for each front lamp 150 as the inspection target and for each inspection item. In the present embodiment, the characteristic condition CC is a condition that the difference indicated by the light distribution characteristic information DI is equal to or less than a reference degree determined in advance. Therefore, the characteristic condition CC in the present embodiment includes an optical axis condition related to the optical axis characteristics, a light quantity condition related to the light quantity characteristics, and a light color condition related to the light color characteristics. The characteristic condition CC is included in the condition data CD and is defined for each inspection item in the condition data CD.

The adjustment unit 230 adjusts the optical system 151 in accordance with the inspection result of the light distribution characteristics by the inspection unit 220. In the present embodiment, the adjustment unit 230 controls the adjustment mechanism 155 in accordance with the inspection result to adjust the optical system 151 of the front lamp 150 corresponding to the inspection result. For example, the adjustment unit 230 adjusts the optical system 151 of the first front lamp 150A in accordance with the inspection result of the optical axis of the first front lamp 150A. The adjustment unit 230 adjusts the optical system 151 of the second front lamp 150B in accordance with the inspection result of the optical axis of the second front lamp 150B. More specifically, in adjustment of the optical system 151, the adjustment unit 230 generates an optical system control signal OS to control the adjustment mechanism 155 and transmits the generated optical system control signal OS to the vehicle 100. As a result, the adjustment mechanism 155 is caused to operate by the remote control and the optical system 151 is adjusted. In the present embodiment, in accordance with an optical axis difference related to the optical axis indicated by the optical axis characteristic information, the adjustment unit 230 transmits to the vehicle 100 the optical system control signal OS to decrease the optical axis difference. Thereby, the adjustment unit 230 adjusts the optical system 151 to decrease the optical axis difference.

A notification unit 235 notifies the user of inspection result information related to the inspection result of the front lamp inspection. For example, inspection result information FI indicates at least one of information indicating the inspection result by the inspection unit 220 and the determination result JR by the determination unit 225. In the present embodiment, the notification unit 235 gives notification of the inspection result information FI through the terminal device 450. In other embodiments, the notification unit 235 may give notification of the inspection result through, for example, a display device that outputs visual information, a speaker that outputs audio information, a printer, or the like. Further, in the present embodiment, the notification unit 235 gives notification of the inspection result information FI for each inspection item of the front lamp inspection.

Fig. 4 is a second diagram for explaining the front lamp inspection according to the present embodiment. As illustrated in Fig. 4, in the front lamp inspection of the present embodiment, the remote control unit 210 executes entry processing EP, standby processing SP, and withdrawal processing LP.

The entry processing EP is processing of causing the vehicle 100 to move to the reference position P1 determined in advance. In the entry processing EP of the present embodiment, the remote control unit 210 generates a running control signal RS1 to cause the vehicle 100 to run to the reference position P1 and transmits the generated running control signal RS1 to the vehicle 100.

The standby processing SP is processing of causing the vehicle 100 to stay at the reference position P1 after the entry processing EP. In the standby processing SP, the remote control unit 210 generates a running control signal RS2 to cause the vehicle 100 to stay at the reference position P1 and transmits the generated running control signal RS2 to the vehicle 100. Note that, for example, in a case in which the vehicle 100 stops when the vehicle 100 does not receive the running control signal, in the standby processing SP, the remote control unit 210 may stop transmitting the running control signal to cause the vehicle 100 to stay at the reference position P1. In the standby processing SP of the present embodiment, the vehicle 100 is controlled to face a reference direction DS determined in advance at the reference position P1. In the present embodiment, the reference direction DS is a direction orthogonal to the wall surface WP among directions facing the wall surface WP. More specifically, the reference direction DS is a -Y direction.

Note that, in other embodiments, for example, the remote control unit 210 may determine whether the vehicle 100 positioned at the reference position P1 faces the reference direction DS before the inspection image KG is acquired. For example, the external sensor 300 can be used for such determining. When the vehicle 100 positioned at the reference position P1 does not face the reference direction DS, the remote control unit 210 may control the vehicle 100 by the remote control in such a manner that the vehicle 100 is positioned at the reference position P1 and faces the reference direction DS.

The withdrawal processing LP is processing of causing the vehicle 100 to move from the reference position P1 after the standby processing SP. In the withdrawal processing LP of the present embodiment, the remote control unit 210 generates a running control signal RS3 to cause the vehicle 100 to run from the reference position P1 to a next position and transmits the generated running control signal RS3 to the vehicle 100. In the present embodiment, upon execution of the withdrawal processing LP, the vehicle 100 passes through the gate GT in the permitting state and runs toward the second place PL2.

In the present embodiment, the inspection image KG is captured while the standby processing SP is executed. More specifically, when light is emitted toward the wall surface WP from the front lamp 150 of the vehicle 100 that is stopped at the reference position P1 while facing the reference direction DS, the projected light LT appears on the wall surface WP. Then, the projected light LT appearing on the wall surface WP is captured by the imaging device CM, and thereby the inspection image KG is captured. The image acquisition unit 215 acquires the inspection image KG captured in this way while the standby processing SP is executed. The inspection unit 220 uses the inspection image KG acquired in this way to inspect the light distribution characteristics while the standby processing SP is executed.

As illustrated in Fig. 4, in the present embodiment, the remote control unit 210 switches the front lamp 150 as the inspection target from OFF to ON after the entry processing EP is started and before the inspection image KG is captured. Further, the remote control unit 210 switches the front lamp 150 as the inspection target from ON to OFF after the inspection image KG is captured and before the withdrawal processing LP is started.

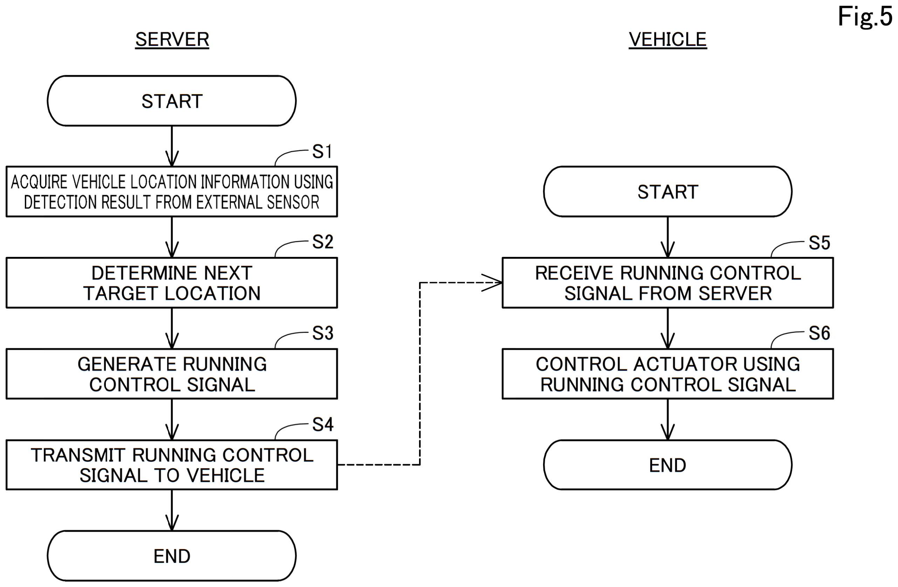

FIG. 5 is a flowchart showing a processing procedure for running control of the vehicle 100 in the first embodiment. In a procedure in Fig. 5, the processor 201 of the server 200 functions as the remote control unit 210, and the processor 111 of the vehicle 100 functions as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the inspection system 50 or outside the inspection system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the inspection system 50 in the present embodiment, it becomes possible to move the vehicle 100 without using a transport unit such as a crane or a conveyor.

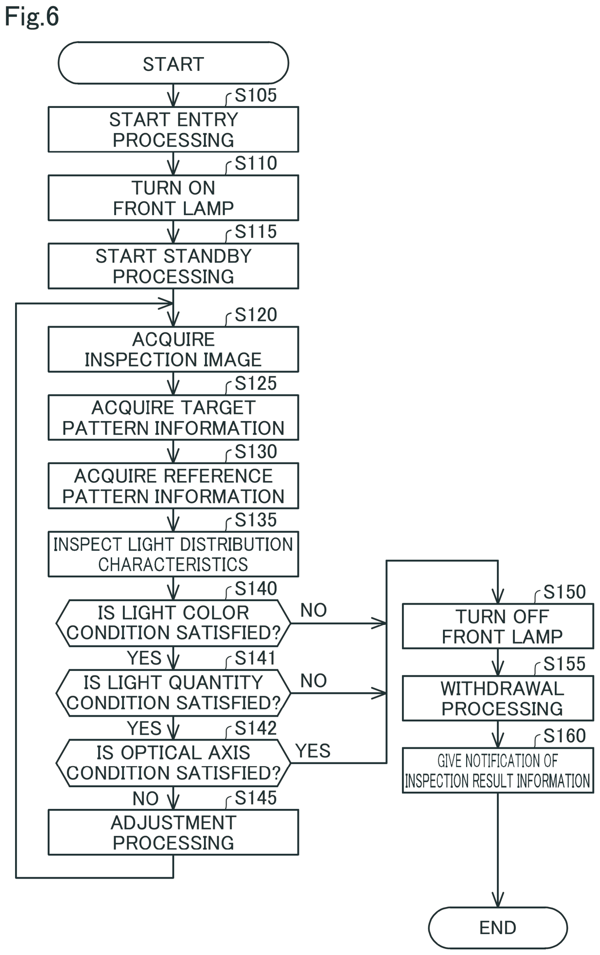

Fig. 6 is a flowchart illustrating a procedure of inspection processing to implement an inspection method according to the present embodiment. The inspection processing is processing to execute the front lamp inspection. For example, the inspection processing is started by the processor 201 of the server 200 at a timing at which the vehicle 100 is positioned at a given position in the factory FC.

At Step S105 in Fig. 6, as illustrated in Fig. 4, the remote control unit 210 starts the entry processing EP to start moving of the vehicle 100 to the reference position P1. At Step S110 in Fig. 6, the remote control unit 210 switches the front lamp 150 as the inspection target from OFF to ON as illustrated in Fig. 4, more specifically, from OFF to the low-beam mode. Step S110 is executed while the entry processing EP is executed.

At Step S115 in Fig. 6, as illustrated in Fig. 4, the remote control unit 210 ends the entry processing EP and starts the standby processing SP to cause the vehicle 100 to stay at the reference position P1. Step S115 is executed at a timing at which moving of the vehicle 100 to the reference position P1 is completed. Then, the external sensor 300 as the imaging device CM captures the inspection image KG while the standby processing SP is executed.

At Step S120 in Fig. 6, the image acquisition unit 215 acquires the captured inspection image KG. Step S125, the inspection unit 220 uses the inspection image KG acquired at Step S120 to acquire the target pattern information TI. At Step S130, the inspection unit 220 acquires the reference pattern information SI corresponding to the vehicle type of the vehicle 100. At Step S135, the inspection unit 220 compares the target pattern information TI acquired at Step S125 and the reference pattern information SI acquired at Step S130 to inspect the light distribution characteristics of the front lamp 150.

At Steps S140, S141, and S142, the determination unit 225 determines whether the inspection result of Step S135 satisfies the characteristic condition CC. More specifically, at Step S140, the determination unit 225 determines whether the inspection result of the light color characteristics, that is, the light color characteristic information satisfies the light color condition. If the light color characteristic information satisfies the light color condition at Step S140, at Step S141, the determination unit 225 determines whether the inspection result of the light quantity characteristics, that is, the light quantity characteristic information satisfies the light quantity condition. If the characteristic condition CC is not satisfied at Step S140 or Step S141, the determination unit 225 proceeds the processing to Step S150. If the light quantity characteristic information satisfies the light quantity condition at Step S141, at Step S142, the determination unit 225 determines whether the inspection result of the optical axis characteristics, that is, the optical axis characteristic information satisfies the optical axis condition.

If the optical axis condition is not satisfied at Step S142, at Step S145, the adjustment unit 230 executes adjustment processing. The adjustment processing is processing of adjusting the optical system 151 while the standby processing SP is executed. At Step S145 of the present embodiment, the adjustment unit 230 adjusts the optical system 151 to decrease the optical axis difference in accordance with the optical axis difference indicated by the optical axis characteristic information. Then, the external sensor 300 as the imaging device CM captures the inspection image KG once again.

Then, the inspection unit 220 returns the processing to Step S120. Note that, at Step S120 executed once again, the inspection image KG captured after completion of the adjustment processing at Step S145 is acquired. The processing at Step S135 executed once again corresponds to re-inspection processing. The re-inspection processing is processing of re-inspecting the optical axis characteristics of the front lamp 150 while the standby processing SP is executed. At Steps S140, S141, and S142 executed once again, the determination unit 225 determines whether the inspection result of the light distribution characteristics re-inspected at Step S135 executed once again satisfies the characteristic condition CC. Note that, after Step S135 executed for a second time or thereafter, the processing at Step S140 and/or Step S141 may be omitted.

If the light color condition or the light quantity condition is not satisfied at Step S140 or Step S141, or if the optical axis condition is satisfied at Step S142, at Step S150, the remote control unit 210 switches the front lamp 150 as the inspection target from ON to OFF, more specifically, from the low-beam mode to OFF. Note that, as illustrated in Fig. 4, the processing at Steps S115 to S150 is executed while the standby processing SP is executed.

At Step S155, the standby processing SP is ended and the withdrawal processing LP is executed to cause the vehicle 100 to move from the reference position P1 to the next position. That is, in the present embodiment, the inspection unit 220 executes the withdrawal processing LP when the inspection result of the optical axis characteristics satisfies the optical axis condition, and does not execute the withdrawal processing LP until the inspection result of the optical axis characteristics satisfies the optical axis condition. As a result, in the present embodiment, inspection of the optical axis characteristics and adjustment of the optical system 151 may repetitively be executed until the optical axis characteristics of the front lamp 150 satisfy the optical axis condition while the vehicle 100 is stopped at the reference position P1. Then, when the optical axis condition is satisfied, the vehicle 100 is promptly moved from the reference position P1 by the withdrawal processing LP.

At Step S160, the notification unit 235 gives notification of the inspection result information FI related to the vehicle 100. At Step S160, notification of the latest inspection result information FI related to the vehicle 100 is given. For example, in a case in which the re-inspection processing is executed once or more, at Step S160, with regard to the optical axis characteristics, notification of the inspection result of the optical axis characteristics obtained through the re-inspection processing executed last time, and the determination result JR related to the concerned inspection result is given. That is, at Step S160 of the present embodiment, notification of the inspection result information FI indicating that the optical axis characteristics are normal is given. For example, if the light color condition or the light quantity condition is not satisfied at Step S140 or Step S141, notification of the inspection result information FI indicating that the light color characteristics or the light quantity characteristics are abnormal is given. When the light color characteristics or the light quantity characteristics are abnormal as described above, for example, repair of the front lamp 150, such as repair or replacement of the light source 159, or repair or replacement of the optical system 151, may be executed. The front lamp inspection may be performed again for the same vehicle 100 after such repair of the front lamp 150.

According to the inspection system 50 of the present embodiment described above, the inspection image KG including the projected light LT projected on the projection target from the front lamp 150 is used to inspect the light distribution characteristics of the front lamp 150. Therefore, the light distribution characteristics of the front lamp 150 can be inspected by the new method using the inspection image KG. In the present embodiment, dedicated equipment that is conventionally used for inspection of the front lamp 150, that is, a headlamp tester, is unnecessary, and a comparatively general-purpose device, such as the imaging device CM, can be utilized to build the inspection system 50 that can automatically inspect the front lamp 150.

In the present embodiment, the adjustment unit 230 adjusts the optical system 151 in accordance with the inspection result by the inspection unit 220. Therefore, it is possible not only to inspect the light distribution characteristics, but also to effectively improve the light distribution characteristics in accordance with the inspection result of the light distribution characteristics.

In the present embodiment, the target pattern that is the light distribution pattern of the projected light LT in the inspection image KG and the reference light distribution pattern corresponding to the type of the vehicle 100 are compared to inspect the light distribution characteristics. Therefore, the light distribution characteristics of various types of vehicles 100 can be inspected by the simpler method.

In the present embodiment, the entry processing EP, the standby processing SP, and the withdrawal processing LP are executed. The inspection image KG is captured by the imaging device CM, the inspection image KG is acquired by the image acquisition unit 215, and the light distribution characteristics is inspected by the inspection unit 220 while the standby processing SP is executed. Therefore, it is possible to utilize the unmanned driving to move the vehicle 100 to the reference position P1, inspect the light distribution characteristics while the vehicle 100 stays at the reference position P1, and make the reference position P1 vacant after completion of the inspection. As a result, the unmanned driving can be utilized to more smoothly inspect the light distribution characteristics. Particularly, the front lamp inspection for a plurality of vehicles 100 can be executed smoothly in a continuous manner.

In the present embodiment, after the optical axis characteristics are inspected, when the inspection result of the optical axis characteristics does not satisfy the optical axis condition, the adjustment processing is executed. Then, after execution of the adjustment processing, the re-inspection processing is executed. Therefore, when the inspection result of the optical axis characteristics does not satisfy the optical axis condition, adjustment of the optical system 151 and re-inspection of the optical axis characteristics can efficiently be executed while the vehicle 100 stays at the reference position P1.

In the present embodiment, when the inspection result of the optical axis characteristics does not satisfy the optical axis condition, the withdrawal processing LP is not executed. Thus, the steps from the inspection of the optical axis characteristics to the adjustment of the optical system 151 can be executed in a batch while the vehicle 100 stays at the reference position P1.

In the present embodiment, the front lamp 150 is switched from OFF to ON after the entry processing EP is started and before the inspection image KG is captured. Therefore, while energy consumption by the front lamp 150 is suppressed, the light distribution characteristics can be inspected more smoothly.

In the present embodiment, the front lamp 150 is switched from ON to OFF after the inspection image KG is captured and before the withdrawal processing LP is started. Therefore, energy consumption by the front lamp 150 can be further suppressed.

In the present embodiment, the projection target is the wall surface WP of the wall WL installed outside of the vehicle 100. Therefore, the wall WL can be utilized to inspect the light distribution characteristics. As a result, the wall WL as the projection target can capture, from its front, light from the front lamp 150. Thereby, for example, as compared with a case in which the projection target is a floor surface, the inspection image KG including a clearer projection pattern is more likely to be acquired, and the front lamp inspection is more likely to be performed in a more appropriate manner. Furthermore, in the present embodiment, the wall WL is formed by the gate GT that can permit and prohibit access of the vehicle 100. Therefore, by the gate GT permitting access of the vehicle 100 after completion of the inspection, the vehicle 100 can more smoothly be caused to leave from the inspection site DP after completion of the inspection.

In the present embodiment, the inspection image KG containing the projected light LT including the first light LT1 projected by the first front lamp 150A and the second light LT2 projected by the second front lamp 150B can be used to inspect the light distribution characteristics of the first front lamp 150A and the light distribution characteristics of the second front lamp 150B in a batch.

In the present embodiment, the camera as the external sensor 300 used to acquire the vehicle positional information for the unmanned driving can be utilized to inspect the light distribution characteristics.

### B. Second Embodiment

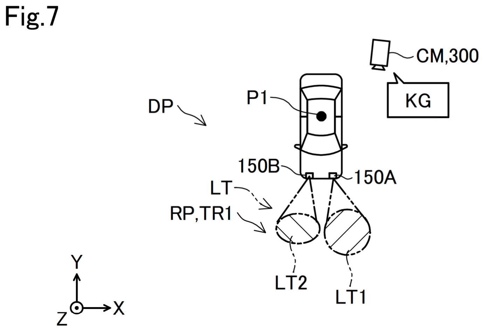

Fig. 7 is a diagram for explaining front lamp inspection according to a second embodiment. As illustrated in Fig. 7, the front lamp inspection of the second embodiment is different from that of the first embodiment in that the projected light LT is projected on a road surface RP of a track TR1 at the inspection site DP. That is, the projection target is the road surface RP. In the present embodiment, when light is emitted to the road surface RP from the front lamp 150 of the vehicle 100 that is stopped at the reference position P1, the projected light LT appears on the road surface RP. Then, the projected light LT appearing on the road surface RP is captured by the imaging device CM, and thereby the inspection image KG is captured. Note that configurations of the inspection system 50 of the second embodiment that are similar to those of the first embodiment are not particularly described. According to the inspection system 50 of the second embodiment, the track TR1 can be utilized to inspect the light distribution characteristics. As a result, for example, even when the wall WL usable in the front lamp inspection is not provided to the inspection site DP, the light distribution characteristics can be inspected. Moreover, since the vehicle 100 can run on the road surface RP used as the projection target, as compared with the mode in which the wall WL is used, the vehicle 100 can more smoothly be moved upon execution of the front lamp inspection.

### C. Third Embodiment

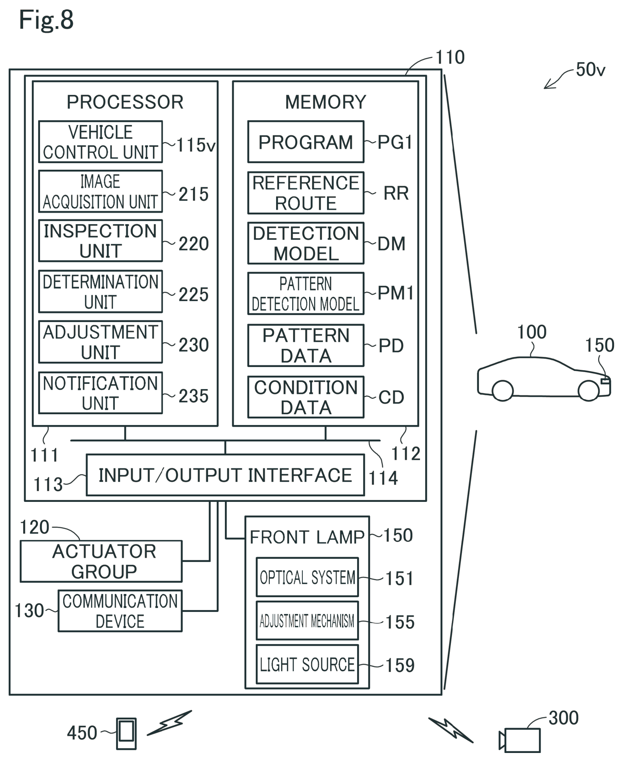

Fig. 8 is an explanatory diagram illustrating a schematic configuration of an inspection system 50v according to a third embodiment. The present embodiment is different from the first embodiment in that the inspection system 50v does not include the server 200. The vehicle 100 of the present embodiment is capable of running by autonomous control of the vehicle 100. Other configurations are the same as those of the first embodiment unless otherwise described.

In the present embodiment, the communication device 130 of the vehicle 100 can communicate with the external sensor 300 and the terminal device 450. The processor 111 of the vehicle control device 110 executes the program PG1 stored in the memory 112, thus functioning as a vehicle control unit 115v, the image acquisition unit 215, the inspection unit 220, the determination unit 225, and the adjustment unit 230. The vehicle control unit 115v acquires the output result of the sensor and uses the output result to generate the running control signal. The vehicle control unit 115v then outputs the generated running control signal to cause the actuator group 120 to operate, and thus can cause the vehicle 100 to run by the autonomous control. In the present embodiment, the memory 112 stores, in addition to the program PG1, the detection model DM, the reference route RR, the pattern data PD, the pattern detection model PM1, and the condition data CD in advance. The vehicle control unit 115v of the third embodiment corresponds to the "control unit" of the present disclosure.

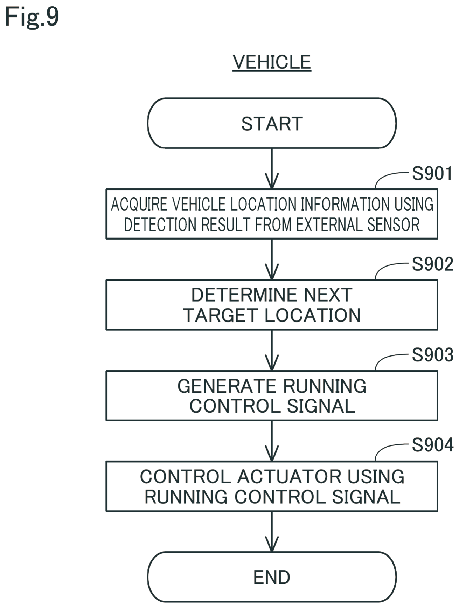

FIG. 9 is a flowchart showing a processing procedure for running control of the vehicle 100 in the second embodiment. In a procedure in Fig. 9, the processor 111 of the vehicle 100 executes the program PG1, thus functioning as the vehicle control unit 115v.

In step S901, the processor 111 of the vehicle control device 110 acquires vehicle location information using detection result output from the camera as the external sensor 300. In step S902, the processor 111 determines a target location to which the vehicle 100 is to move next. In step S903, the processor 111 generates a running control signal for causing the vehicle 100 to run to the determined target location. In step S904, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator in a predetermined cycle. According to the inspection system 50v in the present embodiment, it is possible to cause the vehicle 100 to run by autonomous control without controlling the vehicle 100 remotely using the server 200.

In the present embodiment, the processor 111 of the vehicle control device 110 executes inspection processing similar to that in Fig. 6. However, in the present embodiment, at Steps S105 and S155 in Fig. 6, the vehicle 100 is moved by the autonomous control of the vehicle 100. At Steps S110 to S150, the vehicle 100 is caused to standby by the autonomous control of the vehicle 100.

Also according to the inspection system 50v of the third embodiment, the light distribution characteristics of the front lamp 150 can be inspected by the new method using the inspection image KG.

### D. Other Embodiments

(D1) In each of the embodiments described above, the inspection system 50 may not include the adjustment unit 230.

(D2) In each of the embodiments described above, in the comparison processing, the pattern detection model PM1 as the machine learning model is used to prepare the target pattern information TI and the reference pattern information SI, but the present disclosure is not limited to this. For example, a given algorithm to execute extraction of a given feature from an image and description of the extracted given feature may be used to acquire the target pattern information TI and the reference pattern information SI. For example, such a given feature includes, in accordance with the inspection item of the front lamp inspection, a brightness feature related to brightness, a saturation feature related to saturation, a hue feature related to hue, and/or a luminance feature related to luminance. Each of the brightness feature, the saturation feature, the hue feature, and the luminance feature may include an edge feature related to an edge. More specifically, for example, when the inspection item includes the optical axis, the given feature preferably includes at least one of the brightness feature and the luminance feature. When the inspection item includes the light quantity, the given feature preferably includes at least one of the brightness feature and the luminance feature. When the inspection item includes the light color, the given feature preferably includes the hue feature. Further, the pattern detection model PM1 may be, for example, a rule-based model that can utilize a given algorithm to output the target pattern information TI and the reference pattern information SI.

(D3) In each of the embodiments described above, the target pattern and the reference light distribution pattern are compared to inspect the light distribution characteristics, but the present disclosure is not limited to this. For example, the inspection unit 220 may input the inspection image KG into an inspection model to inspect the light distribution characteristics. For example, the inspection model is a machine learning model that has been trained to output, in response to input of the inspection image KG, the inspection result of the light distribution characteristics. As such an inspection model, for example, a convolutional neural network (CNN) that has been trained through supervised learning can be used. The inspection model may be, for example, a rule-based model constructed to be capable of inspecting the light distribution characteristics based on the inspection image KG.

(D4) In each of the embodiments described above, the entry processing EP, the standby processing SP, and the withdrawal processing LP are executed in the front lamp inspection. However, one or some, or all of the entry processing EP, the standby processing SP, and the withdrawal processing LP may not be executed. For example, at least one or some of moving the vehicle 100 to the reference position P1, stopping the vehicle 100 at the reference position P1, and moving the vehicle 100 from the reference position P1 may be implemented by manned driving or by transporting the vehicle 100 by a transport device.

(D5) In each of the embodiments described above, the inspection image KG is captured while the vehicle 100 is stopped, but the present disclosure is not limited to this. For example, the inspection image KG may be captured while the vehicle 100 runs at a given speed or lower. The given speed as used herein is low speed that allows the front lamp inspection to appropriately be executed, and is determined based on experiment or simulation, for example. More specifically, for example, the given speed is low speed that allows detection of the target pattern information TI by using the pattern detection model PM1 or extraction of the given feature by using the given algorithm to appropriately be executed. Accordingly, the vehicle inspection can more efficiently be executed without stopping the vehicle 100. Note that also in the mode in which the inspection image KG is captured while the vehicle 100 runs, the inspection image KG is preferably captured at the timing at which the vehicle 100 is positioned at the reference position P1 and the vehicle 100 faces the reference direction DS. Accordingly, at the imaging timing at which the inspection image KG is captured, a positional relationship and an angle relationship between the vehicle 100, the projection target, and the imaging device CM can be fixed, and thereby the inspection image KG can be used to more effectively execute the front lamp inspection. Note that, in both of the modes in which the inspection image KG is captured while the vehicle 100 is stopped and in which the inspection image KG is captured while the vehicle 100 runs, the inspection image KG may be captured while the vehicle 100 is not positioned at the reference position P1 and/or the vehicle 100 does not face the reference direction DS. In this case, at least one of the inspection image KG and information acquired based on the inspection image KG may be corrected in accordance with the position and direction of the vehicle 100 at the imaging timing of the inspection image KG. The information acquired based on the inspection image KG is, for example, the target pattern information TI.

(D6) In each of the embodiments described above, the adjustment processing is executed, but the adjustment processing may not be executed. For example, after the light distribution characteristics of the front lamp 150 are inspected once, the withdrawal processing LP may be executed without execution of the adjustment processing, and the inspection processing may be ended. In each of the embodiments described above, the re-inspection processing is executed, but the re-inspection processing may not be executed. For example, after the adjustment processing is executed, the withdrawal processing LP may be executed without execution of the re-inspection processing, and the inspection processing may be ended.

(D7) In each of the embodiments described above, the front lamp 150 is switched from OFF to ON after the entry processing EP is started and before the inspection image KG is captured, but the present disclosure is not limited to this. For example, the front lamp 150 may be switched ON before the entry processing EP is started, and the ON state of the front lamp 150 may be maintained until the inspection image KG is captured. For example, the front lamp 150 may be switched ON after the standby processing SP is started.

(D8) In each of the embodiments described above, the front lamp 150 is switched from ON to OFF after the inspection image KG is captured and before the withdrawal processing LP is started, but the present disclosure is not limited. For example, after the inspection image KG is captured, the ON state of the front lamp 150 may be maintained without being switched OFF. For example, the front lamp 150 may be switched OFF after the withdrawal processing LP is started.

(D9) In each of the embodiments described above, the projection target is not limited to the wall surface WP or the road surface RP. For example, the projection target may be a floor surface of a floor on which the vehicle 100 is not able to run.

(D10) In each of the embodiments described above, the projected light LT includes the first light LT1 by the first front lamp 150A and the second light LT2 by the second front lamp 150B. However, the projected light LT may include only projected light by one front lamp 150, or may include only projected light by three or more front lamps 150. For example, when the front lamp as the inspection target is one front lamp 150, the projected light LT may include only projected light by the one front lamp 150. Also when the front lamp as the inspection target is two or more front lamps 150, the projected light LT may include only projected light by one front lamp 150. In this case, for each front lamp as the inspection target, a different inspection image including only projected light by the concerned front lamp may be used, and thereby the light distribution characteristics of each front lamp as the inspection target may be inspected.

(D11) In each of the embodiments described above, the camera that is the external sensor 300 is used as the imaging device CM used for the front lamp inspection, but the present disclosure is not limited to this. For example, a camera not utilized for the unmanned driving among cameras installed in the factory FC may be used as the imaging device CM disposed outside of the vehicle 100. A camera provided to the vehicle 100 other than the vehicle 100 as the inspection target of the front lamp inspection may be used as the imaging device CM disposed outside of the vehicle 100. The imaging device CM is not limited to the imaging device disposed outside of the vehicle 100, but may be an imaging device installed on the vehicle 100.

(D12) In each of the embodiments described above, in the inspection system 50, the various functional units including the image acquisition unit 215, the inspection unit 220, the determination unit 225, and the adjustment unit 230 may be provided to the vehicle 100. In this case, as described in the third embodiment, all of the image acquisition unit 215, the inspection unit 220, the determination unit 225, and the adjustment unit 230 may be provided to the vehicle 100, or some of these functional units may be provided to the vehicle 100. In the inspection system 50, some or all of these functional units may be provided to, for example, a device outside of the server 200 and the vehicle 100. Various types of information including the detection model DM, the reference route RR, the pattern data PD, the pattern detection model PM1, and the condition data CD may be stored in the memory 112, the memory 202, or a device or a recording medium outside of the server 200 and the vehicle 100.

(D13) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100.

(D14) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D15) In the above-described third embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D16) In the above-described third embodiment, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal. The functional configuration of the inspection system 50v may be entirely provided at the vehicle 100. Specifically, the processes realized by the inspection system 50v in the present disclosure may be realized by the vehicle 100 alone.

(D17) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D18) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D19) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The present disclosure is not limited to the embodiments described above, but can be implemented in a variety of configurations without departing from the spirit of the present disclosure. For example, in order to solve some or all of the aforementioned problems or to achieve some or all of the aforementioned effects, the technical features of the embodiment corresponding to the technical features in each aspect described in the summary can appropriately be substituted or combined. Unless the technical feature is explained herein as being essential, it can be eliminated as appropriate.

## Claims

1. An inspection system (50;50v) comprising:
an image acquisition unit (215) configured to acquire an image captured by an imaging device, the image comprising projected light (LT) projected on a projection target from a front lamp (150) provided to a moving object; and
an inspection unit (220) configured to use the acquired image to inspect light distribution characteristics of the front lamp (150).

2. The inspection system (50;50v) according to claim 1, further comprising an adjustment unit (230) configured to adjust an optical system (151) of the front lamp (150), wherein
the adjustment unit (230) is configured to adjust the optical system (151) in accordance with an inspection result of the light distribution characteristics by the inspection unit (220).

3. The inspection system (50;50v) according to claim 1, wherein the inspection unit (220) is configured to compare a light distribution pattern of the projected light (LT) in the image and a reference light distribution pattern corresponding to a type of the moving object to inspect the light distribution characteristics.

4. The inspection system (50;50v) according to claim 1, further comprising,
a control unit configured to cause the moving object to move by unmanned driving, wherein
the control unit is configured to execute:
entry processing (EP) of causing the moving object to move to a reference position (P1) determined in advance;
standby processing (SP) of causing the moving object to stay at the reference position (P1) after the entry processing (EP); and
withdrawal processing (LP) of causing the moving object to move from the reference position (P1) after the standby processing (SP),
the image acquisition unit (215) is configured to acquire the image captured during execution of the standby processing (SP), while the standby processing (SP) is executed, and
the inspection unit (220) is configured to inspect the light distribution characteristics while the standby processing (SP) is executed.

5. The inspection system (50;50v) according to claim 4, further comprising,
an adjustment unit (230) configured to adjust an optical system (151) of the front lamp (150), wherein
the light distribution characteristics comprise optical axis characteristics related to an optical axis of the front lamp (150),
after the optical axis characteristics are inspected, when an inspection result of the optical axis characteristics by the inspection unit (220) does not satisfy an optical axis condition determined in advance, the adjustment unit (230) is configured to execute adjustment processing of adjusting the optical system (151) in accordance with the inspection result while the standby processing (SP) is executed, and
after the adjustment processing is executed, the inspection unit (220) is configured to re-inspect the optical axis characteristics while the standby processing (SP) is executed.

6. The inspection system (50;50v) according to claim 5, wherein the control unit is configured not to execute the withdrawal processing (LP) until the inspection result satisfies the optical axis condition.

7. The inspection system (50;50v) according to claim 4, wherein the control unit is configured to:
be capable of controlling the front lamp (150); and
switch the front lamp (150) from OFF to ON after the entry processing (EP) is started and before the image is captured.

8. The inspection system (50;50v) according to claim 4, wherein the control unit is configured to:
be capable of controlling the front lamp (150); and
switch the front lamp (150) from ON to OFF after the image is captured and before the withdrawal processing (LP) is started.

9. The inspection system (50;50v) according to claim 1, wherein the projection target is a wall surface of a wall installed outside of the moving object.

10. The inspection system (50;50v) according to claim 1, wherein the projection target is a road surface (RP) of a track (TR) on which a vehicle (100) as the moving object is capable of running.

11. The inspection system (50;50v) according to claim 1, wherein
the front lamp (150) comprises a first front lamp (150) and a second front lamp (150),
the projected light (LT) comprises first light projected by the first front lamp (150) and second light projected by the second front lamp (150), and
the inspection unit (220) is configured to use the acquired image to inspect light distribution characteristics of the first front lamp (150) and light distribution characteristics of the second front lamp (150).

12. The inspection system (50;50v) according to any one of claims 1 to 11, wherein the imaging device is installed outside of the moving object and used to acquire positional information of the moving object for unmanned driving of the moving object.

13. An inspection method comprising the steps of:
acquiring an image captured by an imaging device, the image comprising projected light (LT) projected on a projection target from a front lamp (150) provided to a moving object; and
using the acquired image to inspect light distribution characteristics of the front lamp (150).
